# EUROPÄISCHE PATENTSCHRIFT

(11) **EP 3 467 451 B1**
(45) Veröffentlichungstag und Bekanntmachung des Hinweises auf die Patenterteilung: **11.11.2020**
(21) Anmeldenummer: 18193845.7
(22) Anmeldetag: 11.09.2018
(51) Int. Cl.: G01F 23/284, G01S 13/32, G01S 13/88

(54) **VERFAHREN UND FÜLLSTANDMESSGERÄT ZUR BESTIMMUNG DES FÜLLSTANDES EINES MEDIUMS MITTELS DAUERSTRICH-RADARMESSUNG**
FILL LEVEL MEASURING DEVICE AND METHOD FOR DETERMINING THE LEVEL OF A MEDIUM BY CONTINUOUS WAVE RADAR MEASUREMENT
PROCÉDÉ ET APPAREIL DE MESURE DE NIVEAU DE REMPLISSAGE PERMETTANT DE DÉTERMINER LE NIVEAU DE REMPLISSAGE D'UN MILIEU AU MOYEN D'UNE MESURE RADAR CONTINUE

(30) Priorität: 05.10.2017 DE 102017123185
(43) Veröffentlichungstag der Anmeldung: 10.04.2019
(73) Patentinhaber: Krohne S.A.S., 26103 Romans-sur-Isere Cedex (FR)
(72) Erfinder: VOGT, Michael, 44797 Bochum (DE); Storch, Robert, 58511 Lüdenscheid (DE); Notzon, Gordon, 44801 Bochum (DE)
(74) Vertreter: Gesthuysen Patent- und Rechtsanwälte

(56) Entgegenhaltungen:
- EP-A1- 1 124 142
- EP-A1- 3 029 434
- EP-A2- 1 933 117
- DE-A1-102010 063 733
- GB-A- 2 304 249
- GB-A- 2 317 769
- US-A1- 2012 056 774

## Beschreibung

Die Erfindung betrifft ein Verfahren zur Bestimmung des Füllstandes eines Mediums mittels Dauerstrich-Radarmessung, wobei von einem Codesequenz-Generator eine Codesequenz erzeugt und von einem Sender ein mit der Codesequenz codiertes Sendesignal emittiert wird, wobei das Sendesignal zumindest teilweise am Medium reflektiert wird und als Reflexionssignal von einem Empfänger empfangen wird, wobei das Reflexionssignal und ein von dem Sendesignal abgeleitetes Signal mit einem Korrelator einer Korrelationsanalyse unterzogen werden und ein Korrelationsergebnis resultiert, wobei eine Steuer- und Auswerteeinheit mit dem Korrelationsergebnis den Zeitversatz der korrelierten Signale und daraus den Mediumfüllstand ermittelt. Darüber hinaus betrifft die Erfindung auch ein Füllstandmessgerät zur Bestimmung des Füllstandes eines Mediums mittels Dauerstrich-Radarmessung mit einem Codesequenz-Generator, mit einem Sender, mit einem Empfänger, mit einem Korrelator und mit einer Steuer- und Auswerteeinheit, die so eingesetzt werden und zusammenspielen, dass das vorgenannte Verfahren durch das Messgerät realisiert wird.

Auf Radarmessung basierende Füllstandmessgeräte befinden sich seit vielen Jahren im industriellen Einsatz. Den Füllstandmessgeräten und den in ihnen zur Anwendung kommenden Verfahren ist gemein, dass die Zeit gemessen wird, die ein in dem Füllstandmessgerät generiertes Sendesignal benötigt, um von einer definierten Emissionsstelle zu der Oberfläche des Mediums zu gelangen und von dort als Reflexionssignal zurück zu dem definierten Ort des Empfängers, wobei als Empfänger nicht nur die Stelle des physikalischen Empfangs des Reflexionssignals verstanden wird (z. B. Empfangsantenne), sondern auch der Ort oder der örtliche Bereich der Auswertung des Reflexionssignals. Jedenfalls kann mittels der gemessenen Laufzeit und mit dem Wissen um die Ausbreitungsgeschwindigkeit der elektromagnetischen Wellen auf die Entfernung der Mediumoberfläche von dem Füllstandmessgerät geschlossen werden.

Als gerätetechnische Ausführungen werden im Wesentlichen kabelgebundene und freistrahlende Füllstandmessgeräte unterschieden. Bei kabelgebundenen Geräten breiten sich die elektromagnetischen Wellen entlang eines in das zu vermessende Volumen hineinhängenden Kabels aus, weshalb derartige Füllstandmessgeräte vergleichsweise störsicher sind. Sie weisen jedoch den Nachteil auf, dass das als Messsonde dienende Kabel in der zu vermessenden Strecke untergebracht werden muss. Bei freistrahlenden Füllstandmessgeräten stellt sich dieses Problem nicht, da die elektromagnetischen Wellen über einen als Antenne ausgestalteten Sender in den zu vermessenden Raum als Freiraumwelle emittiert werden. Derartige Füllstandmessgeräte sind etwas störanfälliger, beispielsweise aufgrund des Empfangs von parasitären Echos, die von Gehäusewandungen oder Einbauten in dem Gehäuse stammen. Bei den hier betrachteten Verfahren und den hier betrachteten Füllstandmessgeräten kommt es auf die zuvor beschriebene Art und Weise der Wellenführung nicht an.

Von Bedeutung ist für das vorliegend betrachtete Verfahren und die Art der vorliegend betrachteten Füllstandmessgeräte, dass das Prinzip der Dauerstrich-Radarmessung Anwendung findet, bei dem im Gegensatz zum Impulsradar während der Dauer des Messvorgangs fortwährend ein Sendesignal emittiert wird, das vorliegend mit einer gewissen Codierung versehen wird; aus diesem Grund wird die Dauerstrich-Radarmessung auch als "continuous wave radar" bezeichnet. Durch die Codierung des Sendesignals wird dem Sendesignal über seine Dauer hinweg ein charakteristisches und damit wiedererkennbares Muster aufgeprägt, sodass jeder Ort im Sendesignal weidererkennbar ist. Im Prinzip werden in dem Korrelator des Füllstandmessgerätes dann das codierte Sendesignal und das - die gleiche Codierung aufweisende - Reflexionssignal miteinander verglichen, wobei die Codierung es ermöglicht, den zeitlichen Versatz zwischen dem Sendesignal und Reflexionssignal zu ermitteln. Da das originale Sendesignal bei Eintreffen des Reflexionssignals nicht mehr zur Verfügung steht, wird üblicherweise ein von dem Sendesignal abgeleitetes Signal erzeugt, wobei dieses abgeleitete Signal die gleiche Codierung wie das Sendesignal aufweist, damit eine Korrelationsanalyse von dem Korrelator sinnvoll durchgeführt werden kann. Auf Grundlage des Korrelationsergebnisses kann dann der Zeitversatz der korrelierten Signale und daraus der Mediumfüllstand ermittelt werden.

Aus dem Stand der Technik sind im Wesentlichen zwei verschiedene Verfahren zur Füllstandbestimmung mit Dauerstrich-Füllstandmessgeräten bekannt. Beim ersten Verfahren wird die gesamte Signalverarbeitung in analoger Schaltungstechnik, also zeitkontinuierlich, ohne Abtastung und Quantisierung, durchgeführt, also auch der Korrelator ist in analoger Schaltungstechnik aufgebaut. Dabei wird das Reflexionssignal mit dem codierten Sendesignal bzw. mit einem von dem codierten Sendesignal abgeleiteten Sendesignal gemischt (multipliziert) und einem analogen Integrierer zugeführt, entweder direkt oder über ein analoges Tiefpassfilter. Der Integrator und auch das Tiefpassfilter werden dann beispielsweise mit Operationsverstärkern oder in anderer analoger Halbleiterschaltungstechnik implementiert. Problematisch an dieser Lösung ist, dass der Integrator zur Durchführung hochpräziser Messungen ebenfalls hochgenau eine bekannte Integrationszeit einhalten muss, nämlich zur Berechnung des Korrelationsintegrals. Dies ist schwierig zu gewährleisten, da es sich um analoge Schaltungskomponenten handelt, die naturgemäß Bauteiltoleranzen aufweisen, Alterungseffekten unterliegen und zum Teil eine recht deutliche Temperaturabhängigkeit aufweisen.

Bei einem anderen Verfahren erfolgt die gesamte Signalverarbeitung in der Empfangskette vollständig digital, also zeitdiskret und auch wertemäßig quantisiert. Dazu wird das Reflexionssignal abgetastet (direkt oder sequenziell) und nachfolgend ein digitales Korrelationsfilter in digitaler Signalverarbeitung realisiert. Bei diesem Verfahren werden zwar einige Nachteile der schaltungsmäßig vollständig in analoger Technik realisierten Signalverarbeitung vermieden, dafür werden aber andere Nachteile in Kauf genommen, wie beispielsweise ein schlechterer Signal-Störabstand, eine große Messzeit aufgrund der sequenziellen Abtastung des Reflexionssignals, die immer über die gesamte Länge der Codesequenz zu erstrecken ist, auch wenn tatsächlich nur die Korrelation über ein kleineres Zeitintervall von Interesse ist. Ferner ist der Aufwand zur Realisierung einer geeigneten Abtastschaltung zur Abtastung des hochfrequenten Reflexionssignals beträchtlich, da nur HF-Komponenten zum Einsatz kommen können, die die gesamte HF-Bandbreite abdecken. Auch die weitere digitale Signalverarbeitung, egal ob digitale Signalprozessoren eingesetzt oder ggf. auch Lösungen mit FPGAs eingesetzt werden, sind technologisch anspruchsvoll und kostenaufwendig.

Die EP 1 933 117 A2 beschreibt ein Verfahren zur Bestimmung des Füllstandes eines Mediums mittels Dauerstrich-Radarmessung, bei dem ein Reflexionssignal und ein von einem Sendesignal abgeleitetes Signal mit einem Korrelator einer Korrelationsanalyse unterzogen werden, wobei von einem Analog/Digital-Wandler ein digitales Ausgangssignal erzeugt wird. Aufgabe der vorliegenden Erfindung ist es, ein Verfahren zur Bestimmung des Füllstands eines Mediums mittels Dauerstrich-Radarmessung und ein diesbezügliches Füllstandmessgerät anzugeben, bei dem die Nachteile der aus dem Stand der Technik bekannten Lösungen weitestgehend vermieden werden.

Die zuvor hergeleitete Aufgabe wird bei dem eingangs beschriebenen Verfahren zur Bestimmung des Füllstandes eines Mediums mittels Dauerstrich-Radarmessung und bei dem eingangs dargestellten Füllstandmessgerät dadurch gelöst, dass der Korrelator einen analogen Mischer aufweist und das Reflexionssignal und das von dem Sendesignal abgeleitete Signal mit dem analogen Mischer zu einem Mischerausgangssignal gemischt werden, dass der Korrelator einen Analog/Digital-Wandler aufweist, mit dem das Mischerausgangssignal abgetastet und zu einem digitalen Mischerausgangssignal quantisiert wird und dass der Korrelator einen digitalen Integrator aufweist, mit dem eine Folge digitaler Mischerausgangssignale digital zu dem Korrelationsergebnis integriert wird. Bei der vorgeschlagenen Lösung wird also abweichend vom Stand der Technik die empfangsseitige Signalverarbeitung nicht rein analog (also zeitkontinuierlich und nicht getakteter Hardware) und nicht rein wie ein diskretes Abtastsystem in digitaler Technik aufgebaut, vielmehr wird ein hybrider Korrelationsempfänger realisiert, der sich analoger Schaltungstechnik im hochfrequenten Bereich bedient und der sich zeitdiskreter, digitaler Lösungen dort bedient, wo technisch weniger anspruchsvolle zeitliche Anforderungen bestehen. So ist der Mischer, mit dem die zu korrelierenden Signale multipliziert werden, in analoger Schaltungstechnik aufgebaut, sodass die Mischung des Reflexionssignals mit dem von dem Sendesignal abgeleiteten Signal zeitkontinuierlich und praktisch beliebig schnell erfolgen kann. Der nachfolgende Analog/Digital-Wandler vermittelt zwischen der zeitkontinuierlichen analogen Welt und der zeitdiskreten digitalen Welt, wobei hier eine Abtastfreqeuenz gewählt wird, die in dem niederfrequenten spektralen Bereich des Mischerausgangssignals liegt. Die Abtastfrequenz ist gemessen an der Frequenz des Sendesignals bzw. des Reflexionssignals sehr klein. Gleichzeitig kann die zeitliche Integration hochpräzise durchgeführt werden, da der Integrator in digitaler Technik aufgebaut ist und hochpräzise und hochstabile Oszillatoren zur Taktgebung existieren und preiswert verfügbar sind.

Erfindungsgemäß ist vorgesehen, dass der Korrelator ferner ein analoges Tiefpassfilter aufweist und das Mischerausgangssignal durch das Tiefpassfilter gefiltert wird und das tiefpassgefilterte Mischerausgangssignal von dem Analog/Digital-Wandler abgetastet und zu einem digitalen Mischerausgangssignal quantisiert wird. Mit dem analogen Tiefpassfilter erfolgt eine Vorfilterung des Mischerausgangssignals. Die primäre Funktion des analogen Tiefpassfilters besteht darin, das Mischerausgangssignal spektral derart zu begrenzen, dass es mit einer vergleichsweise kleinen Abtastfrequenz sauber abgetastet und quantisiert werden kann.

Erfindungsgemäß wird von dem Codesequenz-Generator eine binäre Codesequenz der Länge N_{code} generiert, wobei der Sender jedes Bit der binären Codesequenz mit der Bitdauer T_{chip} emittiert und damit der Sender die binäre Codesequenz mit der binären Codesequenzdauer T_{code} = N_{code} ^{∗} T_{chip} emittiert. Die Bitdauer T_{chip} wird möglichst klein gewählt, um ein möglichst hochfrequentes Sendesignal und Reflexionssignal zu erhalten, da sich dies unmittelbar auf die Ortsauflösung auswirkt. Die Bitdauer für ein einzelnes Codesegment ist hier mit T_{chip} bezeichnet, wodurch angedeutet wird, dass die Taktung hardwaremäßig vorgegeben wird.

Die Abtastung des Mischerausgangssignals, insbesondere des tiefpassgefilterten Mischerausgangssignals erfolgt erfindungsgemäß mit einer Abtastfrequenz fₛₐₘₚₗₑ des Analog/Digital-Wandlers zwischen der Bitfrequenz 1/T_{chip} = f_{chip} und der Codesequenzfrequenz f_{code} = 1/T_{code}. Je größer die Codelänge N_{co-de} gewählt wird, desto niedriger kann später die Abtastfrequenz fₛₐₘₚₗₑ gewählt werden. Bevorzugt wird die Abtastfrequenz fₛₐₘₚₗₑ des Digital/Analog-Wandlers mindestens doppelt so groß gewählt wie die Codesequenzfrequenz f_{code}, vorzugsweise wird die Abtastfrequenz fₛₐₘₚₗₑ als ein Vielfaches größer als Zehn der Codesequenzfrequenz f_{code} gewählt. Bei großen Codelängen N_{code}, kann die Abtastfrequenz fₛₐₘₚₗₑ Zehnerpotenzen unter der Bitfrequenz f_{chip} = 1/T_{chip} gewählt werden (bei beispielsweise N_{code} = 100.000, kann die Abtastfrequenz des Analog/Digital-Wandlers fünf Zehnerpotenzen niedriger gewählt werden als die Bitfrequenz). Hilfreich ist in jedem Fall die Tiefpassfilterung des Mischerausgangssignals, denn das Tiefpassfilter dient dann als Anti-Aliasing-Filter für die Digitalisierung mit dem nachfolgenden Analog/Digital-Wandler mit einer möglichst kleinen Abtastfrequenz, was die Verwendung eines möglichst günstigen Analog/Digital-Wandlers ermöglicht. Die zuvor erläuterten Merkmale gelten gleichermaßen für das beanspruchte Verfahren zur Füllstandmessung nach dem Dauerstrich-Verfahren wie auch für das beanspruchte Füllstandmessgerät.

Im Einzelnen gibt es nun verschiedene Möglichkeiten, das erfindungsgemäße Verfahren und das erfindungsgemäße Füllstandmesssystem auszugestalten und weiterzubilden. Dazu wird verwiesen auf die den unabhängigen Patentansprüchen nachgeordneten Patentansprüche und auf die Beschreibung bevorzugter Ausführungsbeispiele in Verbindung mit der Zeichnung. In der Zeichnung zeigen
- Fig. 1: ein Verfahren und auch ein Füllstandmessgerät zur Bestimmung des Füllstandes eines Mediums mittels Dauerstrich-Radarmessung, wobei ein von dem Sendesignal abgeleitetes Signal mit einem Verzögerungsglied erzeugt wird,
- Fig. 2: ein Füllstandmessgerät und ein dort implementiertes Verfahren zur Bestimmung des Füllstandes, wobei das von dem Sendesignal abgeleitete Signal mit einem separaten Codesequenz-Generator erzeugt wird,
- Fig. 3: die schematische Darstellung verwendeter und verfahrensgemäß erhaltener Signale im Zeit- und Frequenzbereich,
- Fig. 4: ein Füllstandmessgerät mit zwei parallelen Korrelationsempfängern,
- Fig. 5: ein Füllstandmessgerät und ein dort implementiertes Verfahren zur Realisierung einer freistrahlenden Füllstandmessung,
- Fig. 6: wie Fig. 5 aber mit Aufmodulation auf ein hochfrequentes Trägersignal,
- Fig. 7: ein weiteres Füllstandmessgerät mit Quadraturamplitudendemodulation,
- Fig. 8: ein Füllstandmessgerät und ein dort implementiertes Verfahren in redundantem Aufbau und
- Fig. 9: ein Füllstandmessgerät und ein dort implementiertes Verfahren unter Verwendung eines codierten Reflektors.

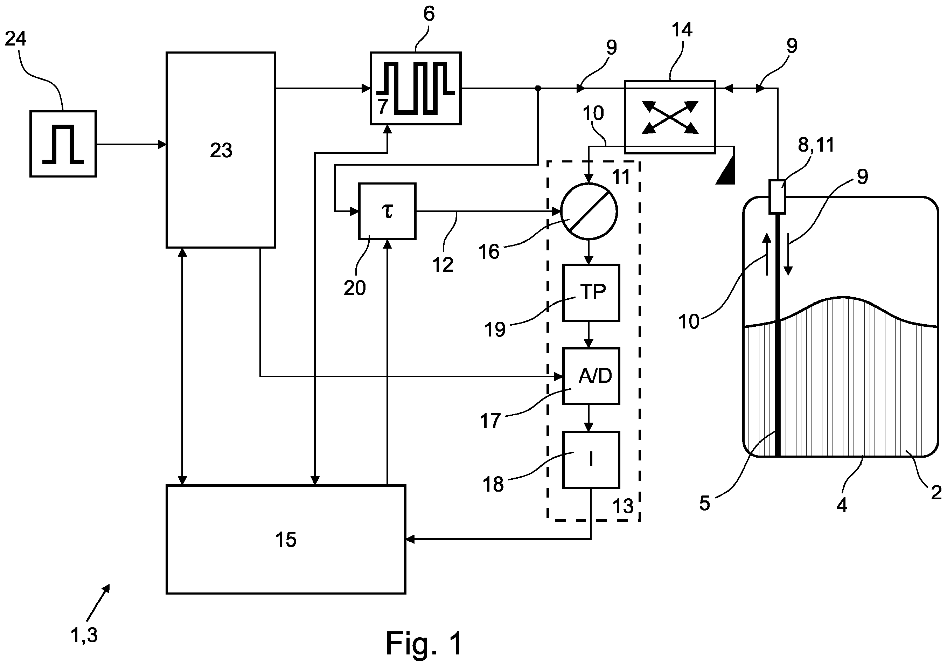

In den Fig. 1, 2 und 4 bis 9 ist durchgängig dargestellt ein Verfahren 1 zur Bestimmung des Füllstandes eines Mediums 2 mittels Dauerstrich-Radarmessung sowie ein dementsprechendes Füllstandmessgerät 3. Die Verfahrensschritte ergeben sich aus den strukturellen Darstellungen der vorgenannten Figuren aus dem Signalfluss (zeitlicher Ablauf) und aus dem funktionalen Bedeutungsinhalt der verwendeten Blöcke in den jeweiligen schematischen Blockschaltbilddarstellungen.

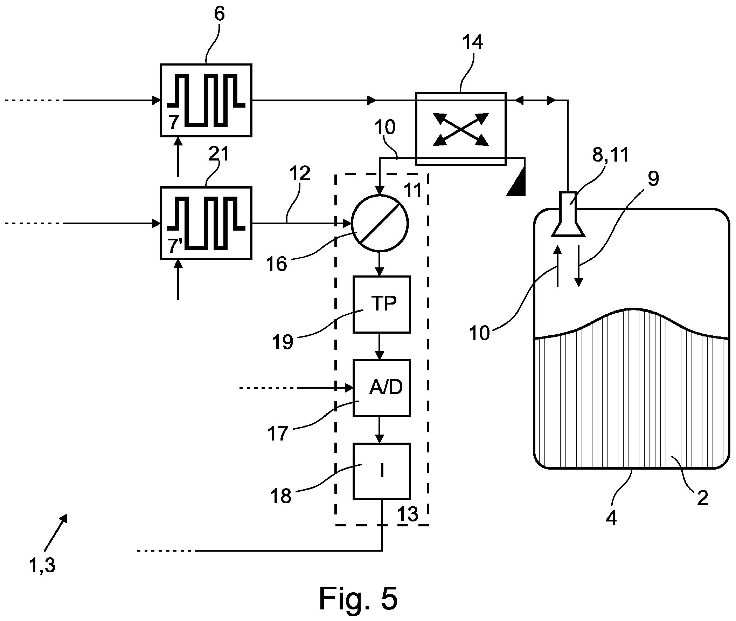

In Fig. 1 ist zunächst dargestellt der grundsätzliche Aufbau des Füllstandmessgeräts 3. Auf der rechten Seite ist ein Silo/Tank 4 gezeigt, der teilbefüllt ist mit dem Medium 2, hier einem Schüttgut. In den Tank 4 ragt in den Abbildungen 1, 2, 8 und 9 jeweils ein Kabel 5 hinein, das der Wellenführung dient, es handelt sich hier also um TDR-Lösungen (time domain reflectometry). Bei den Ausführungsbeispielen in den Fig. 5 bis 7 breiten sich die Dauerstrich-Radarstrahlen im Freiraum des Tanks 4 aus.

Von einem Codesequenz-Generator 6 wird eine Codesequenz 7 erzeugt und von einem Sender 8 wird ein mit der Codesequenz 7 codiertes Sendesignal 9 emittiert, wobei das Sendesignal 9 am Medium 2 zumindest teilweise reflektiert wird und als Reflexionssignal 10 von einem Empfänger 11 empfangen wird. Das Reflexionssignal 10 und ein von dem Sendesignal 9 abgeleitetes Signal 12 werden mit einem Korrelator 13 einer Korrelationsanalyse unterzogen, woraus ein Korrelationsergebnis resultiert. Das Korrelationsergebnis zeigt an, ob die der Korrelationsanalyse unterzogenen beiden Signale, also das Reflexionssignal 10 und das von dem Sendesignal 9 abgeleitete Signal 12 korrelieren. Der Korrelator berechnet ein Korrelationsintegral, das bei vollständiger Übereinstimmung der korrelierten Signale in der normierten Form den Wert 1 liefert und ansonsten - je nach Übereinstimmungsgrad - einen Wert kleiner als 1 liefert. Die Korrelationsanalyse mit den relevanten Korrelationsintegralen im kontinuierlichen oder diskreten Zeitbereich sind an sich bekannt.

In den dargestellten Ausführungsbeispielen werden das Sendesignal 9 und das empfangene Reflexionssignal 10 prozessseitig, also im Bereich der Anschlussstrecke zu Tank 4 über eine einzige physikalische Leitung sowohl hin- als auch zurückgeführt. Um das Reflexionssignal 10 von dem Sendesignal 9 zu trennen, wird in den Ausführungsbeispielen ein Richtkoppler 14 eingesetzt, mit dem Leistungsanteile der geführten Wellen auf andere Leitungen in Abhängigkeit von der Signallaufrichtung übertragen werden. Im vorliegenden Fall wird also das Reflexionssignal 10 in dem Richtkoppler 14 der Leitung zu dem Empfänger 11 zugeführt.

Der Empfänger 11 ist in den Figuren teilweise an mehreren Orten dargestellt, was sich dadurch erklärt, dass verschiedene Teile des Füllstandmessgeräts 3 tatsächlich mit dem Empfang des Reflexionssignals 10 zu tun haben.

Das Korrelationsergebnis des Korrelators 13 wird jedenfalls einer Steuer- und Auswerteeinheit 15 zugeleitet, die mit dem Korrelationsergebnis den Zeitversatz der korrelierten Signale und daraus den Mediumfüllstand ermittelt.

In den Figuren ist jeweils zu sehen, dass der Korrelator 13 einen analogen Mischer 16 aufweist, der also zeitkontinuierlich arbeitet, wobei das Reflexionssignal 10 und das von dem Sendesignal abgeleitete Signal 12 mit dem analogen Mischer 16 zu einem Mischerausgangssignal gemischt werden. Hier besteht das Mischen in einer Multiplikation, es wird praktisch der Integrand des Korrelationsintegrals gebildet.

Der Korrelator 13 weist ferner einen Analog/Digital-Wandler 17 auf, mit dem das Mischerausgangssignal abgetastet und zu einem digitalen Mischerausgangssignal quantisiert wird.

Ferner weist der Korrelator 13 einen digitalen Integrator 18 auf, mit dem eine Folge digitaler Mischerausgangssignale digital zu dem Korrelationsergebnis integriert wird. Der digitale Integrator 18 integriert die Werte des vom Mischer 16 berechneten und ausgegebenen und in einem Zwischenschritt digitalisierten Integranden des Korrelationsintegrals. Für die Genauigkeit der Berechnung des Korrelationsintegrals ist es auch entscheidend, dass die Integrationsdauer sehr präzise eingehalten werden kann, also die Zeit, während der der digitale Integrator 18 fortwährend die bereitgestellten Werte des Integranden aufintegriert. Dies kann in digitaler Technik wesentlich einfacher und mit sehr hoher Präzision garantiert werden im Gegensatz zu Integratoren in analoger Technik.

In den Figuren werden die den Korrelator 13 ausmachenden Elemente, also analoger Mischer 16, Analog/Digital-Wandler 17 und digitaler Integrator 18 von einem gestrichelten Kasten umgeben, der sowohl das Bezugszeichen 11 für Empfänger als auch das Bezugszeichen 13 für Korrelator trägt. Beide Bezeichnungen sind zutreffend, die den Korrelator 13 ausmachenden Baugruppen und Funktionseinheiten bilden tatsächlich den größten funktionalen Teil des Empfangspfades. Der Empfänger 11 wird deshalb auch als Korrelationsempfänger bezeichnet.

Wesentlich ist im vorliegenden Fall, dass sich die Empfangsseite der dargestellten Füllstandmessgeräte 3 sowohl zeitkontinuierlicher, analoger Schaltungstechnik bedient, nämlich in Form des analogen Mischers 11, und gleichwohl auch zeitdiskrete und quantisierte Digitaltechnik verwendet. Dadurch wird erreicht, dass eine schnelle, analoge Technik, die quasi in dem physikalischen Verhalten der verwendeten Bauteile eine Signalverarbeitung durchführt, zur Anwendung kommt und in einem weiteren Bereich, der weniger zeitkritisch ist, eine hochgenaue zeitdiskrete Elektronik zum Einsatz kommt, die beispielsweise gewährleistet, dass mit äußerster Präzision die Integrationszeit zur Berechnung des Korrelationsintegrals eingehalten werden kann, was mit analoger Technik schwer, aufwendig und teuer ist. Man könnte den hier dargestellten Korrelator 13 und Empfänger 11 deshalb auch als einen "hybriden Korrelationsempfänger" bezeichnen.

Alle Darstellungen haben gemeinsam, dass der Korrelator 13 ein analoges Tiefpassfilter 19 aufweist, also ein zeitkontinuierlich arbeitendes und hardwaremäßig realisiertes Tiefpassfilter 19, wobei das Mischerausgangssignal durch das Tiefpassfilter 19 gefiltert wird und das tiefpassgefilterte Mischerausgangssignal von dem Analog/Digital-Wandler 17 abgetastet und zu einem digitalen, zeitdiskreten Mischerausgangssignal quantisiert wird. Mit dem analogen Tiefpassfilter 19 wird das Mischerausgangssignal spektral begrenzt, damit es mit einer vergleichsweise kleinen, oder sogar sehr kleinen Abtastfrequenz sauber abgetastet und quantisiert werden kann.

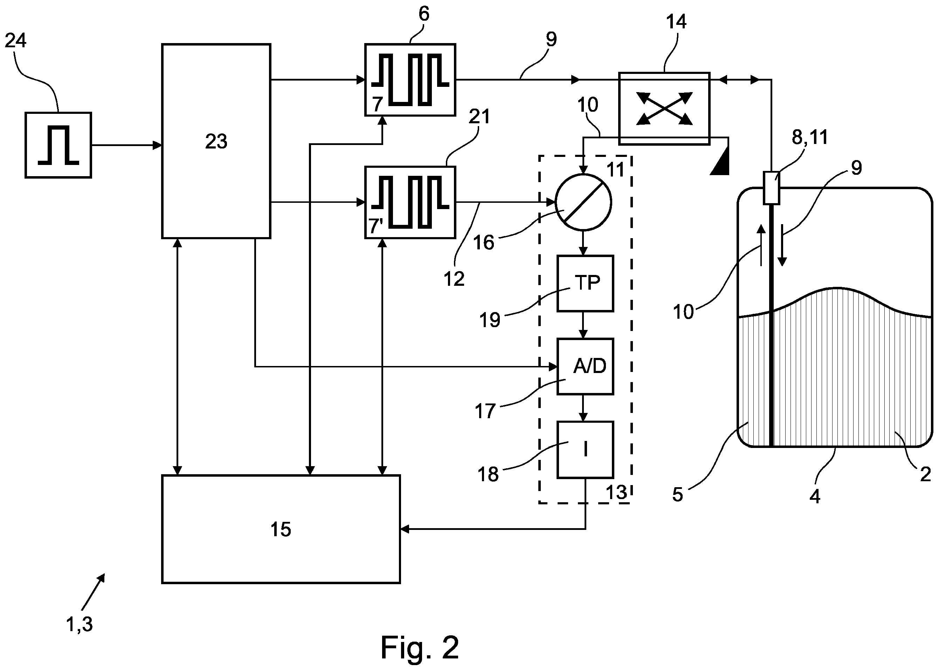

In Fig. 1 ist dargestellt, dass das von dem Sendesignal 9 abgeleitete Signal 12 aus dem Sendesignal 9 mit einem Verzögerungsglied 20 erzeugt wird, so dass das abgeleitete Signal die gleiche Codierung wie das Sendesignal 9 aufweist, dazu aber zeitverschoben ist. Fig. 2 zeigt eine alternative Vorgehensweise, bei der das abgeleitete Signal 12 mit einem weiteren Codesequenz-Generator 21 erzeugt wird, wobei der weitere Codesequenz-Generator 21 die gleiche Codesequenz 7' des Codesequenz-Generators 6 erzeugt, aber zeitverschoben erzeugt zu der Codesequenz 7 des Codesequenz-Generators 6. Das Einstellen verschiedener Zeitverzögerungen zwischen dem Reflexionssignal 10 und dem abgeleiteten Signal 12 mit gleicher Codierung ist erforderlich, um Korrelationsanalyse für verschiedene zeitliche Verschiebungen der Signale durchführen zu können. Wird für eine bestimmte zeitliche Verschiebung ein idealer oder größtmöglicher Korrelationswert berechnet, entspricht die bestimmte zeitliche Verschiebung der Signallaufzeit, die ein Maß für die gemessene Entfernung ist.

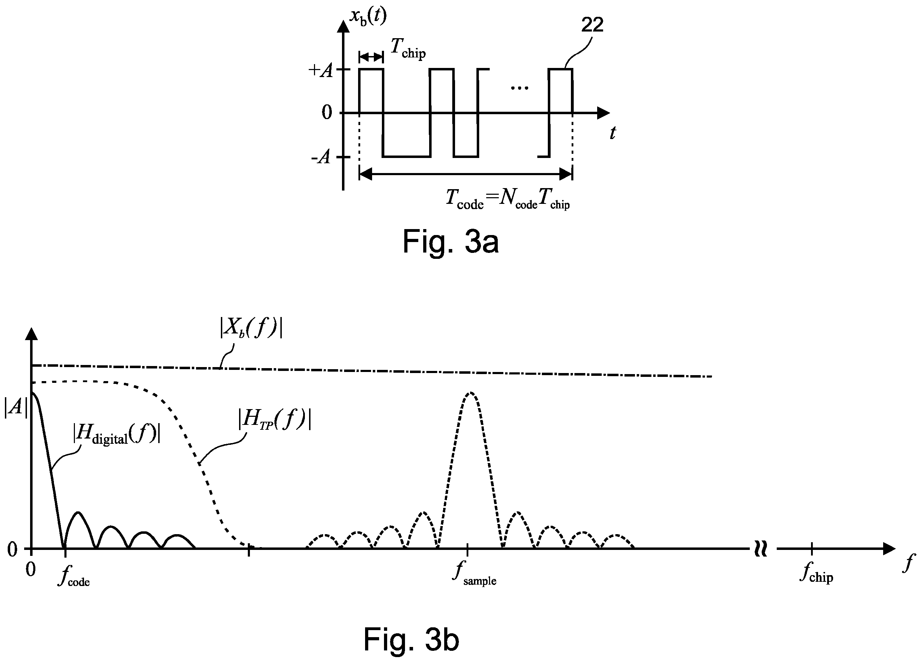

In Fig. 3 sind exemplarisch die erzeugten Signale (Fig. 3a) im Zeitbereich und das Verhalten der Empfangsseite im Frequenzbereich (Fig. 3b) skizziert. Fig. 3a veranschaulicht eine vom Codesequenz-Generator 6 erzeugte binäre Codesequenz 22, x_{b}(t) der Länge N_{code}. Der Sender 8 emittiert dann jedes Bit der binären Codesequenz 22 mit einer Bitdauer T_{chip}. Damit emittiert der Sender 8 die binäre Codesequenz 22 mit der binären Codesequenzdauer T_{code} = N_{code} ^{∗} T_{chip}. in Fig. 3b ist im schematischen Amplitudendiagramm über der Frequenzachse zu sehen, dass die Bitfrequenz f_{chip} = 1/T_{chip} der höchstfrequente Vorgang im Füllstandmessgerät ist. Das Betragsspektrum abs(X_{b}(f)) der binären Codesequenz 22, x_{b}(t) ist extrem breitbandig. Durchgezogen dargestellt ist die Übertragungsfunktion des digitalen Filters über der Abtastfrequenz fₛₐₘₚₗₑ, gestrichelt dargestellt ist das zugehörige Aliasing. Die Abtastung des Mischerausgangssignals, hier des tiefpassgefilterten Mischerausgangssignals, erfolgt mit einer Abtastfrequenz fₛₐₘₚₗₑ des Analog/Digital-Wandlers (17). Die Abtastung erfolgt zwischen der Bitfrequenz 1/T_{chip} und der Codesequenzfrequenz f_{code} = 1/T_{code}, insbesondere wobei die Abtastfrequenz fₛₐₘₚₗₑ des Analog/Digital-Wandlers 17 mindestens der doppelten Codesequenzfrequenz f_{code} entspricht. Ein beispielhafter Werte ist hier für die Bitfrequenz f_{chip} = 2 GHz. Wenn für die Codesequenzlänge N_{code} = 100.000 gesetzt wird, beträgt die Codesequenzfrequenz nur noch 20 kHz. Eine Abtastung gelingt dann also ohne Weiteres mit einer Frequenz von beispielsweise fₛₐₘₚₗₑ = 100 kHz. Das analoge Tiefpassfilter 19 ist so eingestellt, dass es als Anti-Aliasing-Filter für die Digitalisierung mit dem nachfolgenden Analog/Digital-Wandler 17 mit einer möglichst kleinen Abtastfrequenz dient; die Übertragungsfunktion abs(H_{TP}(f)) des Tiefpassfilters ist ebenfalls gestrichelt eingezeichnet, es unterdrückt alle Frequenzen oberhalb etwa der halben Abtastfrequenz fₛₐₘₚₗₑ.

Hinsichtlich der Fig. 1 und 2 ist ausgeführt worden, dass das von dem Sendesignal 9 abgeleitete Signal 12 die gleiche Codierung wie das Sendesignal 9 aufweist, jedoch zeitverschoben ist. Dies gilt auch für die anderen dargestellten Ausführungsbeispiele in den anderen Figuren. Bei den dargestellten Ausführungsbeispielen wird die Zeitverzögerung sequenziell im Bereich der Bitdauer T_{chip} bis maximal zur binären Codesequenzdauer T_{code} = N_{code} ^{∗} T_{chip} durchlaufen, wobei die Zeitverzögerung in jedem Durchlauf jeweils inkrementell erhöht wird um die Bitdauer T_{chip}. So kann die Füllstandinformation mit der besten Ortsauflösung ermittelt werden. Es ist nicht zwingend erforderlich, die Zeitverzögerung bis zur binären Codesequenzdauer T_{code} laufen zu lassen, es kann sogar vorteilhaft sein, die Zeitverzögerung bei einem deutlich kleineren Wert T_{code} enden zu lassen, nämlich bei dem Wert, der dem vorhandenen maximalen Messbereich und damit dem erforderlichen Eindeutigkeitsbereich entspricht. Die Echos der weiteren Laufzeiten interessieren dann nicht, entsprechend kann durch Beschränkung auf eine kürzere Zeit als T_{code} Messzeit eingespart werden.

Aus den Erläuterungen ist ersichtlich, dass die Genauigkeit der Messung entscheidend davon abhängt, wie gut die Generierung der unterschiedlichen Signale aufeinander abgestimmt ist. Aus diesem Grund ist vorgesehen, dass die Steuer- und Auswerteeinheit 15 die Erzeugung der Codesequenz 7 durch den Codesequenz-Generator 6, die Erzeugung des von dem Sendesignal 9 abgeleiteten Signals 12, die Abtastung des Mischerausgangssignals und die Abtastung des tiefpassgefilterten Mischerausgangssignals und vorzugsweise auch die Integration des digitalen Integrators 18 zumindest mittelbar synchronisiert steuert, was durch die Verbindungen zwischen den entsprechenden Blöcken in den Figuren dargestellt ist. Bei den dargestellten Füllstandmessgeräten erfolgt die Steuerung auch mittelbar über eine Takt- und Synchronisationssteuerung 23 steuert, wobei die Takt- und Synchronisationssteuerung 23 vorzugsweise über einen digitalen, hochpräzisen Uhrentakt 24 verfügt. Die Steuerung ist so realisiert, dass die Steuer- und Auswerteeinheit 15 eine neue Messung zentral bei der Takt- und Synchronisationssteuerung 23 anfordert, wobei die Takt- und Synchronisationssteuerung 23 dann die entsprechenden Prozesse bei den verbundenen Stellen anstößt, also beispielsweise bei den Codesequenz-Generatoren 6, 21 und beim Analog/DigitalWandler 17.

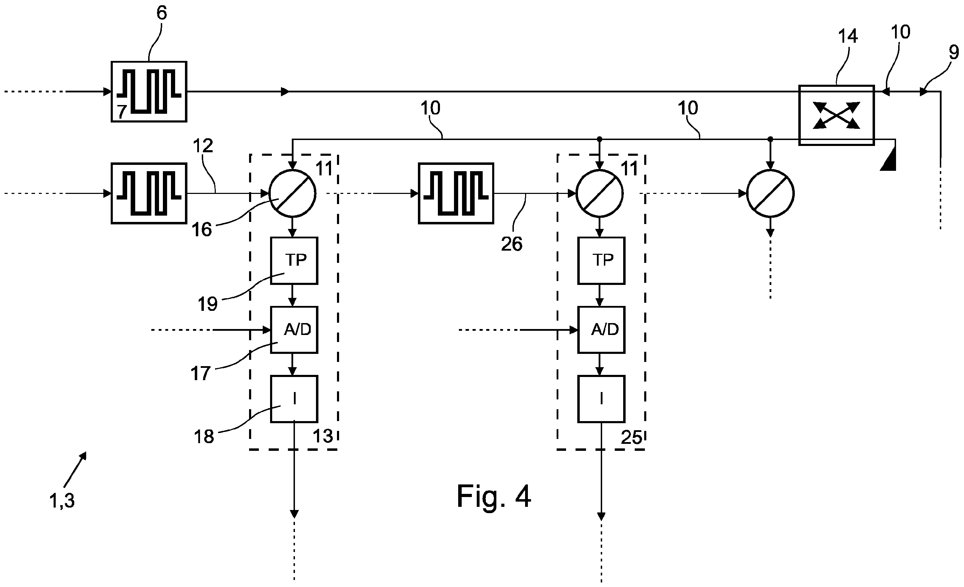

Das in Fig. 4 dargestellte Füllstandmessgerät 3 bzw. das in Fig. 4 dargestellte Verfahren 1 zum Betrieb des Füllstandmessgerätes 3 zeichnet sich dadurch aus, dass mittels wenigstens eines weiteren Korrelators 25 das Reflexionssignal 10 und ein weiteres von dem Sendesignal 9 abgeleitetes Signal 26 mit dem weiteren Korrelator 25 einer Korrelationsanalyse unterzogen werden, wobei das weitere abgeleitete Signal 26 zeitverschoben wird gegenüber dem Sendesignal 9 und gegenüber dem vom Sendesignal 9 abgeleiteten Signal 12, sodass mindestens zwei parallele Korrelationsempfänger realisiert werden. So wird eine Korrelator-Bank realisiert, mit der eine parallele Messsignalverarbeitung erfolgt. Um die Übersichtlichkeit zu erhalten, sind sinngemäß zu ergänzende Funktionsblöcke in der Darstellung ausgelassen worden. Selbstverständlich werden die Korrelationsergebnisse beider Korrelatoren 13, 25 der Steuer- und Auswerteeinheit 15 übermittelt.

Fig. 5 stellt ein Füllstandmessgerät 3 und ein diesbezügliches Verfahren 1 zur Füllstandbestimmung dar, das sich von dem in Fig. 2 dargestellten Ausführungsbeispiel nur dadurch unterscheidet, dass die Füllstandmessung nicht mit einem kabelgeführten Radar arbeitet, sondern mit einem frei abstrahlenden Radar.

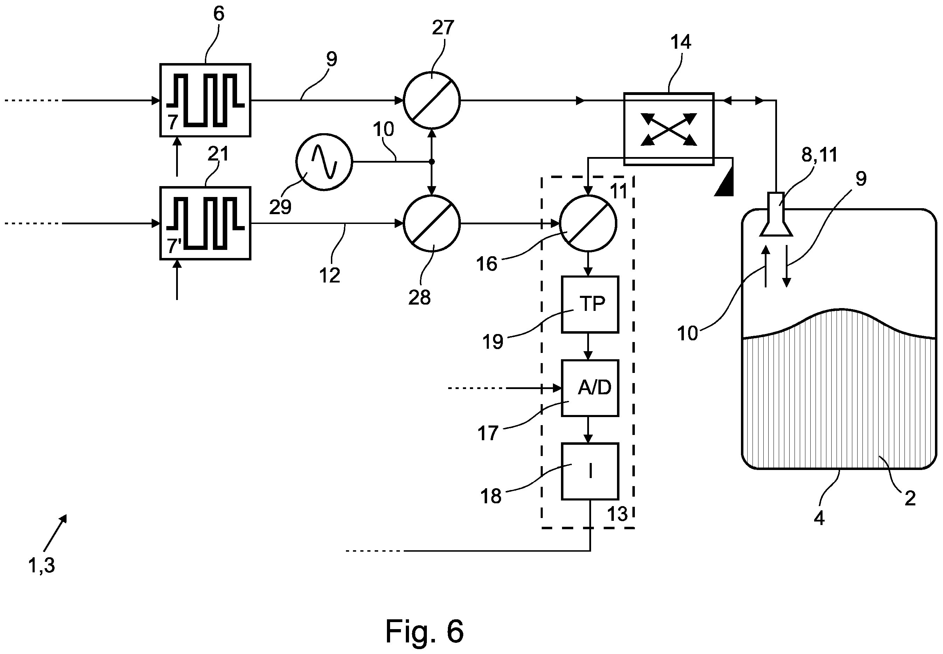

Auch auf das Ausführungsbeispiel in Fig. 6 trifft zu, dass mit einem frei abstrahlenden Radar gearbeitet wird, wobei vom Codesequenz-Generator 6 die erzeugte Codesequenz 7 bzw. das mit der Codesequenz 7 codierte Sendesignal 9 und das von dem Sendesignal 9 abgeleitete Signal 12 mit jeweils einem Hochmischer 27, 28 durch Mischen mit einem hochfrequenten Trägersignal 29 in ein höheres Frequenzband gemischt werden. Wichtig ist, dass das Hochmischen mit beiden zu korrelierenden Signalen erfolgt, die im Mischer 16 multipliziert werden.

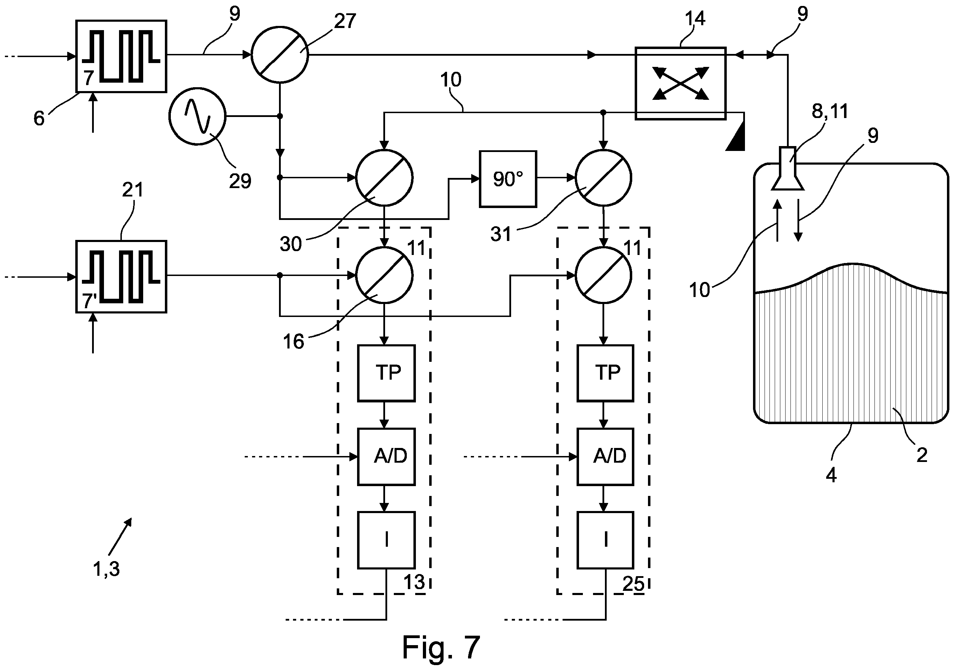

Fig. 7 stellt ein Füllstandmessgerät 3 und ein diesbezügliches Verfahren 1 zur Füllstandbestimmung dar, die sich dadurch auszeichnen, dass die vom Codesequenz-Generator 6 erzeugte Codesequenz 7 bzw. das mit der Codesequenz 7 codierte Sendesignal 9 mit einem Hochmischer 27 durch Mischen mit einem hochfrequenten Trägersignal 29 in ein höheres Frequenzband gemischt wird, dass das empfangene Reflexionssignal 10 zwei separaten Quadraturmischern 30, 31 zugeleitet wird, dass das Reflexionssignal 10 mit dem einen der beiden Quadraturmischer 30 durch Mischen mit dem hochfrequenten Trägersignal ins Basisband zurückgemischt wird und als Inphasenkomponente am Ausgang des Quadraturmischers 30 bereitsteht, dass das Reflexionssignal 10 mit dem anderen Quadraturmischer 31 der beiden Quadraturmischer 30, 31 durch Mischen mit dem um 90° zeitverschobenen hochfrequenten Trägersignal 29 ins Basisband zurückgemischt wird und als Quadraturkomponente am Ausgang des anderen Quadraturmischers 31 bereitsteht, wobei die Inphasenkomponente dem analogen Mischer 16 des Korrelators 13 zugeführt wird und die Quadraturkomponente dem analogen Mischer eines weiteren Korrelators 25 zugeführt wird, wobei den Mischern der Korrelatoren 13, 25 als weiteres Mischsignal jeweils identisch das Sendesignal 9 oder ein von dem Sendesignal 9 abgeleitetes Signal 12 zugeführt wird.

Die derart realisierte Quadraturamplitudendemodulation führt zu einer Inphasenkomponente und einer Quadraturkomponente des Basisbandsignals, die parallel in zwei separaten Signalverarbeitungspfaden (13, 25) verarbeitet werden. Es ergibt sich damit eine Parallelität von Signalverarbeitungspfaden ähnlich wie bei der Korrelator-Bank in Fig. 4, jedoch erfolgt die Ansteuerung und Pulskompression der Inphase- der Quadraturkomponente hier mit demselben weiteren Codesequenz-Generator (21).

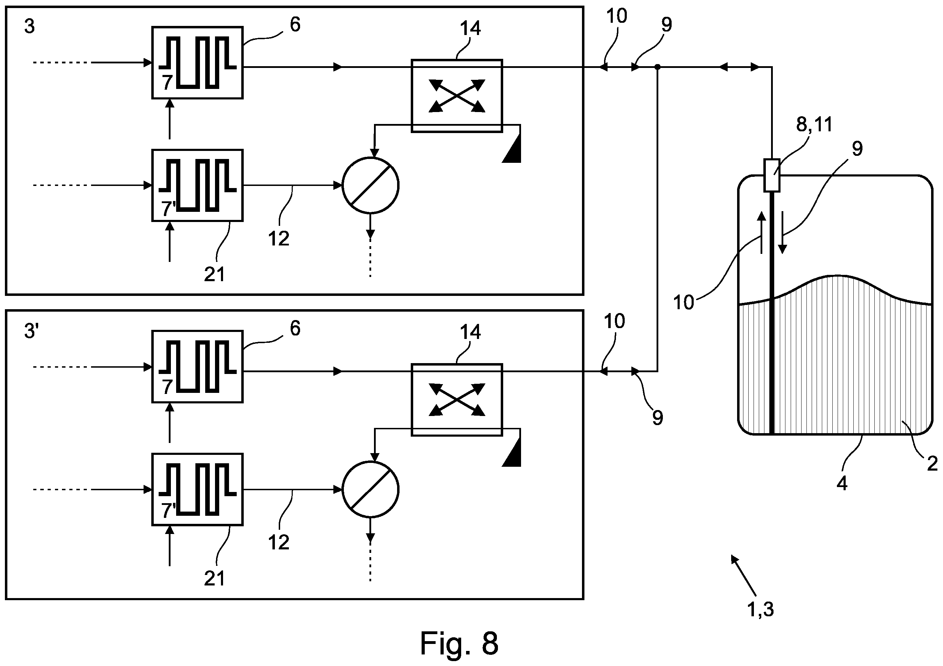

Fig. 8 zeigt ein redundant aufgebautes System mit mehreren parallelen Füllstandmessgeräten, wie es für sicherheitskritische Applikationen sinnvoll ist, z. B. gemäß der SIL-Norm (SIL: Safety Integrity Level). Es kommen redundant zwei (oder ggf. auch mehrere) Füllstandmesssysteme 3, 3' zum Einsatz, die jeweils unabhängig voneinander den Füllstand des Mediums 2 innerhalb des Tanks/Silos 4 messen. Vorzugsweise werden dazu die beiden Füllstandmessgeräte 3, 3' auf dieselbe TDR-Messsonde mit einer gemeinsamen Einkopplung (Sender 8) aufgeschaltet. Eine wechselseitige Beeinflussung (Interferenz) der beiden Füllstandmessgeräte 3,3' und damit Fehlmessungen können mit dem Einsatz von codierten Binärsignalen (Codesequenzen) vorteilhaft und auf einfache Art und Weise unterbunden bzw. stark gemindert werden.

Dazu werden die Codesequenz-Generatoren 6 in den beiden verschiedenen Füllstandmessgeräten so ausgelegt, dass sie derart verschiedene Code-Sequenzen erzeugen, dass die Kreuzkorrelationsfunktion der beiden erzeugten Signale möglichst nahe bei Null ist, d. h. dass die beiden Binärsignale möglichst stark orthogonal zueinander sind. Unter dieser Voraussetzung ist sichergestellt, dass das Sendesignal 9 des ersten Füllstandmessgeräts 3 und das Sendesignal 9 des zweiten Füllstandmessgeräts 3' zu keinen fehlerhaften Detektionen von TDR-Zielen innerhalb des zweiten Füllstandmessgeräts 3' führen und umgekehrt (Codemultiplex).

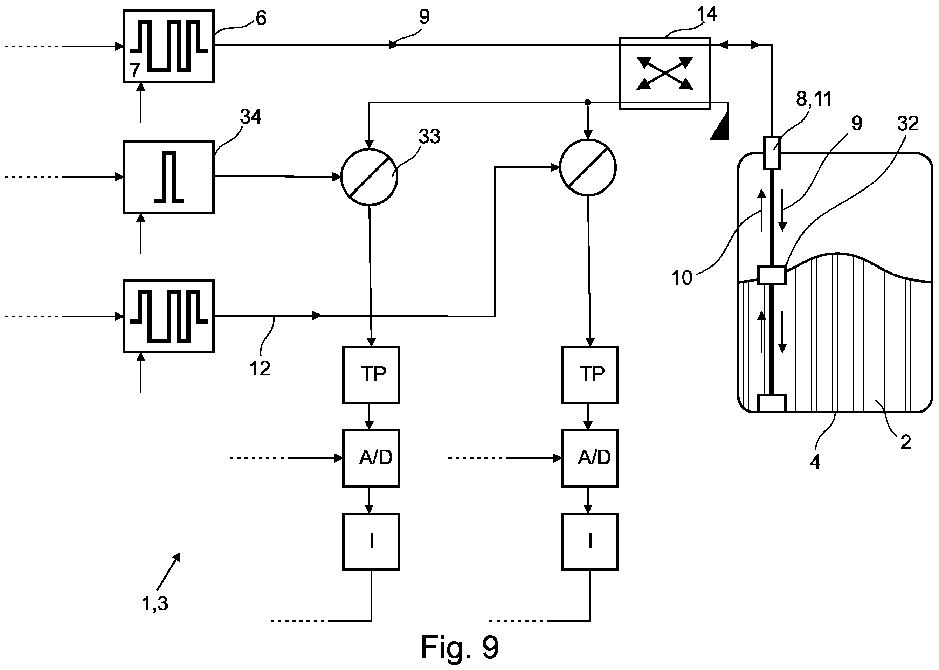

In Fig 9. ist schließlich ein Verfahren 1 und ein Füllstandmessgerät 3 dargestellt mit der Eigenschaft, dass auf dem Medium 2 ein codierter Reflektor 32 eingesetzt wird, beispielsweise in Form eines Schwimmers, wobei die Codierung des Reflektors 32 so gewählt ist, dass das Reflexionssignal 10 des codierten Sendesignals 9 pulsförmig ist, wobei das pulsförmige Reflexionssignal 10 auf einen Pulsmischer 33 geführt wird und mit dem Pulsmischer 33 mit einem von einem Pulsgenerator 34 erzeugten Puls gemischt wird und sequenziell abgetastet wird, nämlich durch Tiefpassfilterung mittels eines analogen Tiefpassfilters, nachfolgende Abtastung und Quantisierung durch einen Analog/Digital-Wandler und Integration mit einem digitalen Integrator. So können zwei verschiedene Messverfahren realisiert werden (Pulsmessung) und Messung eines gespreizten Signals, wodurch wiederum die Möglichkeit der Selbstüberwachung gegeben ist, indem die Messungen über beide parallelen Signalpfade verglichen werden.

### Bezugszeichen

- 1: Verfahren zur Füllstandbestimmung
- 2: Medium
- 3: Füllstandmessgerät
- 4: Tank, Silo, Behälter
- 5: TDR-Kabel
- 6: Codesequenz-Generator
- 7: Codesequenz
- 7': wie Codesequenz 7, aber zeitverschoben
- 8: Sender
- 9: codiertes Sendesignal
- 10: Reflexionssignal
- 11: Empfänger
- 12: vom Sendesignal abgeleitetes Signal
- 13: Korrelator
- 14: Richtkoppler
- 15: Steuer- und Auswerteeinheit
- 16: analoger Mischer
- 17: Analog/Digital-Wandler
- 18: digitaler Integrator
- 19: Tiefpassfilter
- 20: Verzögerungsglied
- 21: weiterer Codesequenz-Generator
- 22: binäre Codesequenz
- 23: Takt- und Synchronisationssteuerung
- 24: Uhrentakt
- 25: weiterer Korrelator
- 26: weiteres vom Sendesignal 9 abgeleitetes Signal
- 27, 28: Hochmischer
- 29: hochfrequentes Trägersignal
- 30, 31: Quadraturmischer
- 32: codierter Reflektor
- 33: Pulsmischer
- 34: Pulsgenerator

## Patentansprüche

1. Verfahren (1) zur Bestimmung des Füllstandes eines Mediums (2) mittels Dauerstrich-Radarmessung, wobei von einem Codesequenz-Generator (6) eine Codesequenz (7) erzeugt und von einem Sender (8) ein mit der Codesequenz (7) codiertes Sendesignal (9) emittiert wird, wobei das Sendesignal (9) zumindest teilweise am Medium (2) reflektiert wird und als Reflexionssignal (10) von einem Empfänger (11) empfangen wird, wobei das Reflexionssignal (10) und ein von dem Sendesignal (9) abgeleitetes Signal (12) mit einem Korrelator (13) einer Korrelationsanalyse unterzogen werden und ein Korrelationsergebnis resultiert, wobei eine Steuer- und Auswerteeinheit (15) mit dem Korrelationsergebnis den Zeitversatz der korrelierten Signale und daraus den Mediumfüllstand ermittelt,
wobei der Korrelator (13) einen analogen Mischer (16) aufweist und das Reflexionssignal (10) und das von dem Sendesignal (9) abgeleitete Signal (12) mit dem analogen Mischer (16) zu einem Mischerausgangssignal gemischt werden, wobei der Korrelator (13) einen Analog/Digital-Wandler (17) aufweist, mit dem das Mischerausgangssignal abgetastet und zu einem digitalen Mischerausgangssignal quantisiert wird und wobei der Korrelator (13) einen digitalen Integrator (18) aufweist, mit dem eine Folge digitaler Mischerausgangssignale digital zu dem Korrelationsergebnis integriert wird, wobei der Korrelator (13) ein analoges Tiefpassfilter (19) aufweist und das Mischerausgangssignal durch das Tiefpassfilter (19) gefiltert wird und das tiefpassgefilterte Mischerausgangssignal von dem Analog/Digital-Wandler (17) abgetastet und zu einem digitalen Mischerausgangssignal quantisiert wird, wobei vom Codesequenz-Generator (6) eine binäre Codesequenz (22) der Länge N_{code} generiert wird und der Sender (8) jedes Bit der binären Codesequenz (22) mit der Bitdauer T_{chip} emittiert und der Sender (8) damit die binäre Codesequenz (22) mit der binären Codesequenzdauer T_{code} = N_{code} ^{∗} T_{chip} emittiert, und wobei die Abtastung des tiefpassgefilterten Mischerausgangssignals mit einer Abtastfrequenz fₛₐₘₚₗₑ des Analog/Digital-Wandlers (17) zwischen der Bitfrequenz 1/T_{chip} und der Codesequenzfrequenz f_{code} = 1/T_{code} erfolgt, nämlich die Abtastfrequenz fₛₐₘₚₗₑ des Analog/Digital-Wandlers (17) mindestens der doppelten Codesequenzfrequenz f_{code} entspricht.

2. Verfahren (1) nach Anspruch 1, **dadurch gekennzeichnet, dass** die Abtastfrequenz fₛₐₘₚₗₑ des Analog/Digital-Wandlers (17) einem Vielfachen größer als Zehn der Codesequenzfrequenz f_{code} entspricht.

3. Verfahren (1) nach Anspruch 1 oder Anspruch 2, **dadurch gekennzeichnet, dass** das von dem Sendesignal (9) abgeleitete Signal (12) aus dem Sendesignal (9) mit einem Verzögerungsglied (20) erzeugt wird oder mit einem weiteren Codesequenz-Generator (21) erzeugt wird, wobei der weitere Codesequenz-Generator (21) die gleiche Codesequenz (7') des Codesequenz-Generators (6) zeitverschoben erzeugt zu der Codesequenz (7) des Codesequenz-Generators (6).

4. Verfahren (1) nach Anspruch 3, **dadurch gekennzeichnet, dass** die Zeitverzögerung sequenziell im Bereich der Bitdauer T_{chip} bis zur binären Codesequenzdauer T_{code} = N_{code} ^{∗} T_{chip} durchlaufen wird, vorzugsweise jeweils inkrementell erhöht um die Bitdauer T_{chip}.

5. Verfahren (1) nach einem der Ansprüche 1 bis 4, **dadurch gekennzeichnet, dass** die Steuer- und Auswerteeinheit (15) die Erzeugung der Codesequenz (7) durch den Codesequenz-Generator (6), die Erzeugung des von dem Sendesignal (9) abgeleiteten Signals (12), die Abtastung des Mischerausgangssignals oder die Abtastung des tiefpassgefilterten Mischerausgangssignals und vorzugsweise auch die Integration des digitalen Integrators (18) zumindest mittelbar synchronisiert steuert, insbesondere zumindest teilweise mittelbar über eine zwischengeschaltete Takt- und Synchronisationssteuerung (23) steuert, wobei die Takt- und Synchronisationssteuerung (23) vorzugsweise über einen digitalen Uhrentakt (24) verfügt.

6. Verfahren (1) nach einem der Ansprüche 1 bis 5, **dadurch gekennzeichnet, dass** mittels wenigstens eines weiteren Korrelators (25) das Reflexionssignal (10) und ein weiteres von dem Sendesignal (9) abgeleitetes Signal (26) mit dem weiteren Korrelator (25) einer Korrelationsanalyse unterzogen werden, insbesondere wobei das weitere abgeleitete Signal (26) zeitverschoben wird gegenüber dem Sendesignal (9) und/oder gegenüber dem vom Sendesignal (9) abgeleiteten Signal (12), sodass mindestens zwei parallele Korrelationsempfänger realisiert werden.

7. Verfahren (1) nach einem der Ansprüche 1 bis 6, **dadurch gekennzeichnet, dass** die vom Codesequenz-Generator (6) erzeugte Codesequenz (7) bzw. das mit der Codesequenz (7) codierte Sendesignal (9) und das von dem Sendesignal (9) abgeleitete Signal (12) mit jeweils einem Hochmischer (27, 28) durch Mischen mit einem hochfrequenten Trägersignal (29) in ein höheres Frequenzband gemischt werden.

8. Verfahren (1) nach einem der Ansprüche 1 bis 6, **dadurch gekennzeichnet, dass** die vom Codesequenz-Generator (6) erzeugte Codesequenz (7) bzw. das mit der Codesequenz (7) codierte Sendesignal (9) mit einem Hochmischer (27) durch Mischen mit einem hochfrequenten Trägersignal (29) in ein höheres Frequenzband gemischt wird, dass das empfangene Reflexionssignal (10) zwei separaten Quadraturmischern (30, 31) zugeleitet wird, das Reflexionssignal (10) mit dem einen der beiden Quadraturmischer (30) durch Mischen mit dem hochfrequenten Trägersignal ins Basisband zurückgemischt wird und als Inphasenkomponente am Ausgang des Quadraturmischers (30) bereitsteht, das Reflexionssignal (10) mit dem anderen Quadraturmischer (31) der beiden Quadraturmischer (30, 31) durch Mischen mit dem um 90° zeitverschobenen hochfrequenten Trägersignal (29) ins Basisband zurückgemischt wird und als Quadraturkomponente am Ausgang des anderen Quadraturmischers (31) bereitsteht, wobei die Inphasenkomponente dem analogen Mischer (16) des Korrelators (13) zugeführt wird und die Quadraturkomponente dem analogen Mischer eines weiteren Korrelators (25) zugeführt wird, wobei den Mischern der Korrelatoren (13, 25) als weiteres Mischsignal jeweils identisch das Sendesignal (9) oder ein von dem Sendesignal (9) abgeleitetes Signal (12) zugeführt wird.

9. Verfahren (1) nach einem der Ansprüche 1 bis 8, **dadurch gekennzeichnet, dass** auf dem Medium (2) ein codierter Reflektor (32) eingesetzt wird, beispielsweise in Form eines Schwimmers, wobei die Codierung des Reflektors (32) so gewählt ist, dass das Reflexionssignal (10) des codierten Sendesignals (9) pulsförmig ist, wobei das pulsförmige Reflexionssignal (10) auf einen Pulsmischer (33) geführt wird und mit dem Pulsmischer (33) mit einem von einem Pulsgenerator (34) erzeugten Puls gemischt wird und sequenziell abgetastet wird, insbesondere durch Tiefpassfilterung mittels eines analogen Tiefpassfilters, nachfolgende Abtastung und Quantisierung durch einen Analog/Digital-Wandler und Integration mit einem digitalen Integrator.

10. Füllstandmessgerät (3) zur Bestimmung des Füllstandes eines Mediums (2) mittels Dauerstrich-Radarmessung, mit einem Codesequenz-Generator (6), wobei von dem Codesequenz-Generator (6) eine Codesequenz (7) erzeugt wird, mit einem Sender (8), wobei von dem Sender (8) ein mit der Codesequenz (7) codiertes Sendesignal (9) emittiert wird, mit einem Empfänger (11), wobei der Empfänger (11) das zumindest teilweise am Medium (2) reflektierte Sendesignal (9) als Reflexionssignal (10) empfängt, mit einem Korrelator (13), wobei das Reflexionssignal (10) und ein von dem Sendesignal (9) abgeleitetes Signal (12) mit dem Korrelator (13) einer Korrelationsanalyse unterzogen werden und ein Korrelationsergebnis resultiert und mit einer Steuer- und Auswerteeinheit (15), wobei die Steuer- und Auswerteeinheit (15) mit dem Korrelationsergebnis den Zeitversatz der korrelierten Signale und daraus den Mediumfüllstand ermittelt,
wobei der Korrelator (13) einen analogen Mischer (16) aufweist und das Reflexionssignal (10) und das von dem Sendesignal (9) abgeleitete Signal (12) mit dem analogen Mischer (16) zu einem Mischerausgangssignal gemischt werden, wobei der Korrelator (13) einen Analog/Digital-Wandler (17) aufweist, mit dem das Mischerausgangssignal abgetastet und zu einem digitalen Mischerausgangssignal quantisiert wird und wobei der Korrelator (13) einen digitalen Integrator (18) aufweist, mit dem eine Folge digitaler Mischerausgangssignale digital zu dem Korrelationsergebnis integriert wird, wobei der Korrelator (13) ein analoges Tiefpassfilter (19) aufweist und das Mischerausgangssignal durch das Tiefpassfilter (19) gefiltert wird und das tiefpassgefilterte Mischerausgangssignal von dem Analog/Digital-Wandler (17) abgetastet und zu einem digitalen Mischerausgangssignal quantisiert wird, wobei vom Codesequenz-Generator (6) eine binäre Codesequenz (22) der Länge N_{code} generiert wird und der Sender (8) jedes Bit der binären Codesequenz (22) mit der Bitdauer T_{chip} emittiert und der Sender (8) damit die binäre Codesequenz (22) mit der binären Codesequenzdauer T_{code} = N_{code} ^{∗} T_{chip} emittiert, und wobei die Abtastung des tiefpassgefilterten Mischerausgangssignals mit einer Abtastfrequenz fₛₐₘₚₗₑ des Analog/Digital-Wandlers (17) zwischen der Bitfrequenz f_{chip} = 1/T_{chip} und der Codesequenzfrequenz f_{code} = 1/T_{code} erfolgt, nämlich die Abtastfrequenz fₛₐₘₚₗₑ des Analog/Digital-Wandlers (17) mindestens der doppelten Codesequenzfrequenz f_{code} entspricht

11. Füllstandmessgerät nach Anspruch 10, **dadurch gekennzeichnet, dass** die Abtastfrequenz fₛₐₘₚₗₑ des Analog/Digital-Wandlers (17) einem Vielfachen größer als Zehn der Codesequenzfrequenz f_{code} entspricht.

12. Füllstandmessgerät (3) nach Anspruch 10 oder Anspruch 11, **dadurch gekennzeichnet, dass** ein Verzögerungsglied (20) umfasst ist, wobei das codierte Sendesignal (9) in das Verzögerungsglied (20) eingangsseitig eingespeist wird und das Verzögerungsglied (20) das zeitverzögerte codierte Sendesignal (9) als das von dem Sendesignal abgeleitete Signal (12) ausgibt, und/oder dass ein weiterer Codesequenz-Generator (21) umfasst ist, wobei der weitere Codesequenz-Generator (21) die gleiche Codesequenz (7') des Codesequenz-Generators (6) zeitverschoben erzeugt zu der Codesequenz (7) des Codesequenz-Generators (6) und als das von dem Sendesignal (9) abgeleitete Signal (12) ausgibt.

## Claims

1. Method (1) for determining the fill level of a medium (2) by means of continuous wave radar measurement, wherein a code sequence (7) is generated by a code sequence generator (6) and a coded transmit signal (9) coded with the code sequence (7) is emitted by a transmitter (8), wherein the transmit signal (9) is at least partially reflected at the medium (2) and is received by a receiver (11) as a reflection signal (10), wherein the reflection signal (10) and a derived signal (12) being derived from the transmit signal (9) are subjected to a correlation analysis with a correlator (13) and a correlation outcome results, wherein a control and evaluation unit (15) determines the time offset of the correlated signals with the correlation outcome and uses it to determine the fill level of the medium, wherein the correlator (13) comprises an analog mixer (16) and the reflection signal (10) and the derived signal (12) being derived from the transmit signal (9) are mixed with the analog mixer (16) into a mixer output signal, wherein the correlator (13) has an analog/digital converter (17), with which the mixer output signal is sampled and quantized to a digital mixer output signal, and wherein the correlator (13) has a digital integrator (18) with which a sequence of digital mixer output signals is digitally integrated into the correlation outcome, wherein the correlator (13) comprises an analog low-pass filter (19) and the mixer output signal is filtered by the low-pass filter (19) and the low-pass filtered mixer output signal is sampled by the analog/digital converter (17) and quantized to a digital mixer output signal, wherein a binary code sequence (22) of the length N_{code} is generated by the code sequence generator (6) and the transmitter (8) emits each bit of the binary code sequence (22) with the bit duration T_{chip} and the transmitter (8) thereby emits the binary code sequence (22) with the binary code sequence duration T_{code} = N_{code} ^{∗} T_{chip}, wherein the sampling of the mixer output signal is sampled at a sampling frequency fₛₐₘₚₗₑ of the analog/digital converter (17) between the bit frequency 1/T_{chip} and the code sequence frequency f_{code} = 1/T_{code}, in particular wherein the sampling frequency fₛₐₘₚₗₑ of the analog/digital converter (17) corresponds to at least twice the code sequence frequency f_{code}.

2. Method (1) according to claim 1, **characterized in that** the sampling frequency fₛₐₘₚₗₑ of the analog/digital converter (17) corresponds to a multiple greater than ten times the code sequence frequency f_{code}.

3. Method (1) according to claim 1 or 2, **characterized in that** the derived signal (12) being derived from the transmit signal (9) is generated from the transmit signal (9) using a delay element (20) or is generated using a further code sequence generator (21), wherein the further code sequence generator (21) generates the same code sequence (7') of the code sequence generator (6) with a time delay to the code sequence (7) of the code sequence generator (6).

4. Method (1) according to claim 3, **characterized in that** the time delay is implemented sequentially in the interval from the bit duration T_{chip} to the binary code sequence duration T_{code} = N_{code} ^{∗} T_{chip}, preferably in each case increased by the bit duration T_{chip} in increments.

5. Method (1) according to any one of claims 1 to 4, **characterized in that** the control and evaluation unit (15) controls the generation of the code sequence (7) by the code sequence generator (6), the generation of the derived signal (12) being derived from the transmit signal (9), the sampling of the mixer output signal or the sampling of the low-pass filtered mixer output signal and preferably also the integration of the digital integrator (18) in an at least indirectly synchronized manner, in particular it at least partially indirectly uses an intermediate clock and synchronization controller (23) for controlling, wherein the clock and synchronization controller (23) preferably has a digital clock beat (24).

6. Method (1) according to any one of claims 1 to 5, **characterized in that**, by means of at least one further correlator (25), the reflection signal (10) and a further signal (26) derived from the transmit signal (9) are subjected to a correlation analysis with the further correlator (25), in particular wherein the further derived signal (26) is time-shifted with respect to the transmit signal (9) and/or with respect to the signal (12) derived from the transmit signal (9), so that at least two parallel correlation receivers are implemented.

7. Method (1) according to any one of claims 1 to 6, **characterized in that** the code sequence (7) generated by the code sequence generator (6) or the coded transmit signal (9) being coded with the code sequence (7) and the derived signal (12) being derived from the transmit signal (9) are each mixed with a high mixer (27, 28) into a higher frequency band by mixing with a high-frequency carrier signal (29).

8. Method (1) according to any one of claims 1 to 6, **characterized in that** the code sequence (7) generated by the code sequence generator (6) or the coded transmit signal (9) being coded with the code sequence (7) is mixed with a high mixer (27) into a higher frequency band by mixing with a high-frequency carrier signal (29), that the received reflection signal (10) is fed to two separate quadrature mixers (30, 31), the reflection signal (10) is mixed back into the baseband with one of the two quadrature mixers (30) by mixing with the high-frequency carrier signal and is available as an in-phase component at the output of the quadrature mixer (30), the reflection signal (10) is mixed back into the baseband with the other quadrature mixer (31) of the two quadrature mixers (30, 31) by mixing with the high-frequency carrier signal (29) which is time-shifted by 90° and is available as quadrature component at the output of the other quadrature mixer (31), wherein the in-phase component is fed to the analog mixer (16) of the correlator (13) and the quadrature component is fed to the analog mixer of a further correlator (25), wherein the transmit signal (9) or a signal (12) derived from the transmit signal (9) is fed identically to the mixers of the correlators (13, 25) as a further mixed signal in each case.

9. Method (1) according to any one of claims 1 to 8, **characterized in that** a coded reflector (32) is used on the medium (2), for example in the form of a float, wherein the coding of the reflector (32) is selected such that the reflection signal (10) of the coded transmit signal (9) is pulse-shaped, wherein the pulse-shaped reflection signal (10) is fed to a pulse mixer (33) and is mixed by the pulse mixer (33) with a pulse generated by a pulse generator (34) and is sampled sequentially, in particular by low-pass filtering by means of an analog low-pass filter, subsequent sampling and quantization by an analog/digital converter and integration with a digital integrator.

10. Fill level measuring device (3) for determining the fill level of a medium (2) by means of continuous wave radar measurement, having a code sequence generator (6), wherein a code sequence (7) is generated by the code sequence generator (6), having a transmitter (8), wherein a coded transmit signal (9) being coded with the code sequence (7) is emitted by the transmitter (8), having a receiver (11), wherein the receiver (11) receives the transmit signal (9) reflected at least partially at the medium (2) as a reflection signal (10), having a correlator (13), wherein the reflection signal (10) and a derived signal (12) being derived from the coded transmit signal (9) are subjected to a correlation analysis with the correlator (13) and a correlation outcome results, and having a control and evaluation unit (15), wherein the control and evaluation unit (15) determines the time offset of the correlated signals with the correlation outcome and uses it to determine the fill level of the medium, wherein the correlator (13) comprises an analog mixer (16) and the reflection signal (10) and the signal (12) derived from the transmit signal (9) are mixed by the analog mixer (16) to form a mixer output signal, wherein the correlator (13) has an analog/digital converter (17), with which the mixer output signal is sampled and quantized to a digital mixer output signal, and wherein the correlator (13) has a digital integrator (18) with which a sequence of digital mixer output signals is digitally integrated into the correlation outcome, wherein the correlator (13) has an analog low-pass filter (19) and the mixer output signal is filtered by the low-pass filter (19) and the low-pass filtered mixer output signal is sampled by the analog/digital converter (17) and quantized to a digital mixer output signal, wherein a binary code sequence (22) of length N_{code} is generated by the code sequence generator (6) and the transmitter (8) emits each bit of the binary code sequence (22) with the bit duration T_{chip} and the transmitter (8) thereby emits the binary code sequence (22) with the binary code sequence duration T_{code} = N_{code} ^{∗} T_{chip}, and wherein the sampling of the mixer output signal, in particular the low-pass filtered mixer output signal, takes place at a sampling frequency fₛₐₘₚₗₑ of the analog/digital converter (17) between the bit frequency f_{chip} = 1/T_{chip} and the code sequence frequency f_{code} = 1/T_{code}, in particular wherein the sampling frequency fₛₐₘₚₗₑ of the analog/digital converter (17) corresponds to at least twice the code sequence frequency f_{code}.

11. Fill level measuring device (3) according to claim 10, **characterized in that** the sampling frequency fₛₐₘₚₗₑ of the analog/digital converter (17) corresponds to a multiple greater than ten times the code sequence frequency f_{code}.

12. Fill level measuring device (3) according to claim 10 or 11, **characterized in that** a delay element (20) is comprised, wherein the coded transmission signal (9) is fed into the delay element (20) on the input side and the delay element (20) outputs the time-delayed coded transmit signal (9) as the signal (12) derived from the transmission signal, and/or that a further code sequence generator (21) is comprised, wherein the further code sequence generator (21) generates the same code sequence (7') of the code sequence generator (6) with a time delay to the code sequence (7) of the code sequence generator (6) and outputs it as the signal (12) derived from the transmit signal (9).

## Revendications

1. Procédé (1) de détermination de niveau de remplissage d'un milieu (2) au moyen d'une mesure radar à onde continue, dans lequel une séquence de code (7) est générée par un générateur de séquence de code (6) et un signal d'émission (9) codé avec la séquence de code (7) est émis par un émetteur (8), dans lequel le signal d'émission (9) est au moins partiellement réfléchi par le milieu (2) et est reçu sous forme de signal de réflexion (10) par un récepteur (11), dans lequel le signal de réflexion (10) et un signal (12) dérivé du signal d'émission (9) sont soumis à une analyse de corrélation au moyen d'un corrélateur (13) et il en résulte un résultat de corrélation, dans lequel une unité de commande et d'évaluation (15) détermine à partir du résultat de corrélation le décalage temporel des signaux corrélés et en déduit le niveau de remplissage du milieu,
dans lequel le corrélateur (13) comporte un mélangeur analogique (16) et le signal de réflexion (10) et le signal (12) dérivé du signal d'émission (9) sont mélangés au moyen du mélangeur analogique (16) afin d'obtenir un signal de sortie de mélangeur, dans lequel le corrélateur (13) comporte un convertisseur analogique/numérique (17) au moyen duquel le signal de sortie de mélangeur est échantillonné et quantifié en un signal de sortie de mélangeur numérique et dans lequel le corrélateur (13) comporte un intégrateur numérique (18) au moyen duquel une séquence de signaux de sortie de mélangeur numériques est intégrée numériquement afin d'obtenir le résultat de corrélation, dans lequel le corrélateur (13) comporte un filtre passe-bas (19) analogique et le signal de sortie de mélangeur est filtré par le filtre passe-bas (19) et le signal de sortie de mélangeur filtré par filtre passe-bas est échantillonné par le convertisseur analogique/numérique (17) et quantifié en un signal de sortie de mélangeur numérique, dans lequel une séquence de code binaire (22) de longueur N_{code} est générée par le générateur de séquence de code (6) et l'émetteur (8) émet chaque bit de la séquence de code binaire (22) avec la durée de bit T_{chip} et l'émetteur (8) émet ainsi la séquence de code binaire (22) avec la durée de séquence de code binaire T_{code} = N_{code} ^{∗} T_{chip}, et dans lequel l'échantillonnage du signal de sortie de mélangeur filtré par filtre passe-bas est effectué avec une fréquence d'échantillonnage fₛₐₘₚₗₑ du convertisseur analogique/numérique (17) entre la fréquence binaire 1/T_{chip} et la fréquence de séquence de code f_{code} = 1/T_{code}, à savoir que la fréquence d'échantillonnage fₛₐₘₚₗₑ du convertisseur analogique/numérique (17) correspond à au moins deux fois la fréquence de séquence de code f_{code}.

2. Procédé (1) selon la revendication 1, **caractérisé en ce que** la fréquence d'échantillonnage fₛₐₘₚₗₑ du convertisseur analogique/numérique (17) correspond à un multiple supérieur à dix de la fréquence de séquence de code f_{code}.

3. Procédé (1) selon la revendication 1 ou la revendication 2, **caractérisé en ce que** le signal (12) dérivé du signal d'émission (9) est généré à partir du signal d'émission (9) au moyen d'un circuit à retard (20) ou est généré au moyen d'un autre générateur de séquence de code (21), dans lequel l'autre générateur de séquence de code (21) génère la même séquence de code (7') que celle du générateur de séquence de code (6) de manière décalée temporellement par rapport à la séquence de code (7) du générateur de séquence de code (6) .

4. Procédé (1) selon la revendication 3, **caractérisé en ce que** le retard est amené à parcourir séquentiellement la plage de la durée de bit T_{chip} jusqu'à la durée de séquence de code binaire T_{code} = N_{code} ^{∗} T_{chip}, de préférence respectivement augmentée de manière incrémentielle de la durée de bit T_{chip}.

5. Procédé (1) selon l'une des revendications 1 à 4, **caractérisé en ce que** l'unité de commande et d'évaluation (15) commande de manière au moins indirectement synchronisée, et en particulier, commande de manière au moins partiellement indirecte, par l'intermédiaire d'une commande d'horloge et de synchronisation interposée (23), la génération de la séquence de code (7) par le générateur de séquence de code (6), la génération du signal (12) dérivé du signal transmis (9), l'échantillonnage du signal de sortie de mélangeur ou l'échantillonnage du signal de sortie de mélangeur filtré par filtre passe-bas et, de préférence, l'intégration effectuée par l'intégrateur numérique (18), dans lequel la commande d'horloge et de synchronisation (23) présente de préférence un top d'horloge numérique (24).

6. Procédé (1) selon l'une des revendications 1 à 5, **caractérisé en ce que**, au moyen d'au moins un autre corrélateur (25), le signal de réflexion (10) et un autre signal (26) dérivé du signal d'émission (9) sont soumis à une analyse de corrélation à l'aide de l'autre corrélateur (25), en particulier dans lequel l'autre signal dérivé (26) est décalé temporellement par rapport au signal d'émission (9) et/ou par rapport au signal (12) dérivé du signal d'émission (9), de telle sorte qu'au moins deux récepteurs à corrélation parallèles sont mis en œuvre.

7. Procédé (1) selon l'une des revendications 1 à 6, **caractérisé en ce que** la séquence de code (7) générée par le générateur de séquence de code (6) ou le signal d'émission (9) codé avec la séquence de code (7) et le signal (12) dérivé du signal d'émission (9) sont mélangés dans une bande de fréquence plus élevée par mélange avec un signal porteur à haute fréquence (29) au moyen d'un mélangeur élévateur (27, 28) respectif.

8. Procédé (1) selon l'une des revendications 1 à 6, **caractérisé en ce que** la séquence de code (7) générée par le générateur de séquence de code (6) ou le signal d'émission (9) codé avec la séquence de code (7) est mélangé dans une bande de fréquence plus élevée au moyen d'un mélangeur élévateur (27) par mélange avec un signal porteur à haute fréquence (29), **en ce que** le signal de réflexion reçu (10) est envoyé à deux mélangeurs en quadrature (30, 31) séparés, le signal de réflexion (10) est ramené par mélange en bande de base au moyen dudit un des deux mélangeurs en quadrature (30) par mélange avec le signal porteur à haute fréquence et est disponible sous forme de composante en phase à la sortie du mélangeur en quadrature (30), le signal de réflexion (10) est ramené par mélange en bande de base au moyen de l'autre mélangeur en quadrature (31) des deux mélangeurs en quadrature (30, 31) par mélange avec le signal porteur à haute fréquence (29) décalé temporellement de 90°, et est disponible sous forme de composante en quadrature à la sortie de l'autre mélangeur en quadrature (31), dans lequel la composante en phase est envoyée au mélangeur analogique (16) du corrélateur (13) et la composante en quadrature est envoyée au mélangeur analogique d'un autre corrélateur (25), dans lequel le signal d'émission (9) ou un signal (12) dérivé du signal d'émission (9) est respectivement envoyé de manière identique aux mélangeurs des corrélateurs (13, 25) en tant qu'autre signal mélangé.

9. Procédé (1) selon l'une des revendications 1 à 8, **caractérisé en ce qu'**un réflecteur codé (32) est mis en place sur le milieu (2), par exemple sous la forme d'un flotteur, dans lequel le codage du réflecteur (32) est sélectionné de telle sorte que le signal de réflexion (10) provenant du signal d'émission codé (9) soit impulsionnel, dans lequel le signal de réflexion impulsionnel (10) est envoyé à un mélangeur d'impulsions (33) et est mélangé au moyen du mélangeur d'impulsions (33) avec une impulsion générée par un générateur d'impulsions (34) et est échantillonné séquentiellement, en particulier par filtrage passe-bas au moyen d'un filtre passe-bas analogique, puis par échantillonnage et quantification par un convertisseur analogique/numérique et par intégration au moyen d'un intégrateur numérique.

10. Appareil de mesure de niveau de remplissage (3) permettant de déterminer le niveau de remplissage d'un milieu (2) au moyen d'une mesure radar à onde continue, comprenant un générateur de séquence de code (6), dans lequel une séquence de code (7) est générée par le générateur de séquence de code (6), un émetteur (8), dans lequel un signal d'émission (9) codé avec la séquence de code (7) est émis par l'émetteur (8), un récepteur (11), dans lequel le récepteur (11) reçoit le signal d'émission (9) au moins partiellement réfléchi par le milieu (2) sous forme de signal de réflexion (10), un corrélateur (13), dans lequel le signal de réflexion (10) et un signal (12) dérivé du signal d'émission (9) sont soumis à une analyse de corrélation au moyen du corrélateur (13) et cela conduit à un résultat de corrélation, et une unité de commande et d'évaluation (15), dans lequel l'unité de commande et d'évaluation (15) détermine à partir du résultat de corrélation le décalage temporel des signaux corrélés et, à partir de celui-ci, le niveau de remplissage du milieu,
dans lequel le corrélateur (13) comporte un mélangeur analogique (16) et le signal de réflexion (10) et le signal (12) dérivé du signal d'émission (9) sont mélangés au moyen du mélangeur analogique (16) afin d'obtenir un signal de sortie de mélangeur, dans lequel le corrélateur (13) comporte un convertisseur analogique/numérique (17) au moyen duquel le signal de sortie de mélangeur est échantillonné et quantifié en un signal de sortie de mélangeur numérique et dans lequel le corrélateur (13) comporte un intégrateur numérique (18) au moyen duquel une séquence de signaux de sortie de mélangeur numériques est intégrée numériquement afin d'obtenir le résultat de corrélation, dans lequel le corrélateur (13) comporte un filtre passe-bas analogique (19) et le signal de sortie de mélangeur est filtré par le filtre passe-bas (19) et le signal de sortie de mélangeur filtré par filtre passe-bas est échantillonné par le convertisseur analogique/numérique (17) et quantifié en un signal de sortie de mélangeur numérique, dans lequel une séquence de code binaire (22) de longueur N_{code} est générée par le générateur de séquence de code (6) et l'émetteur (8) émet chaque bit de la séquence de code binaire (22) avec la durée de bit T_{chip} et l'émetteur (8) émet ainsi la séquence de code binaire (22) avec la durée de séquence de code binaire T_{code} = N_{code} ^{∗} T_{chip}, et dans lequel l'échantillonnage du signal de sortie de mélangeur filtré par filtre passe-bas est effectué avec une fréquence d'échantillonnage fₛₐₘₚₗₑ du convertisseur analogique/numérique (17) entre la fréquence binaire f_{chip} = 1/T_{chip} et la fréquence de séquence de code f_{code} = 1/T_{code}, à savoir que la fréquence d'échantillonnage fₛₐₘₚₗₑ du convertisseur analogique/numérique (17) correspond à au moins deux fois la fréquence de séquence de code f_{code}.

11. Appareil de mesure de niveau de remplissage selon la revendication 10, **caractérisé en ce que** la fréquence d'échantillonnage fₛₐₘₚₗₑ du convertisseur analogique/numérique (17) correspond à un multiple supérieur à dix de la fréquence de séquence de code f_{code}.

12. Appareil de mesure de niveau de remplissage (3) selon la revendication 10 ou la revendication 11, **caractérisé en ce qu'**il est prévu un circuit à retard (20), dans lequel le signal d'émission codé (9) est injecté dans le circuit à retard (20) côté entrée et le circuit à retard (20) délivre le signal d'émission codé retardé (9) sous la forme du signal (12) dérivé du signal d'émission, et/ou **en ce qu'**il est prévu un autre générateur de séquence de code (21), dans lequel l'autre générateur de séquence de code (21) génère la même séquence de code (7') que celle du générateur de séquence de code (6) de manière décalée temporellement par rapport à la séquence de code (7) du générateur de séquence de code (6) et la délivre sous la forme du signal (12) dérivé du signal d'émission (9).
